(19) Europäisches Patentamt / European Patent Office / Office européen des brevets

(11) **EP 1 693 143 B1**

(12) **EUROPEAN PATENT SPECIFICATION**

(45) Date of publication and mention
of the grant of the patent:
**17.09.2014 Bulletin 2014/38**

(51) Int Cl.:
*B23K 35/30* $^{(2006.01)}$      *B23K 35/36* $^{(2006.01)}$
*C21D 1/30* $^{(2006.01)}$

(21) Application number: **06002363.7**

(22) Date of filing: **06.02.2006**

(54) **Weld metal of low temperature toughness and SR cracking resistance used for high-strength Cr-Mo steel**

Schweißmetall der Härte niedriger Temperatur und SR Widerstand zum Spalten für Cr-MO Stahl mit hohem Widerstand

Métal de sudure de la dureté de basse température et SR résistance fendre utilisée pour aciers au Cr-MO de haute résistance

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.02.2005 JP 2005041092**

(43) Date of publication of application:
**23.08.2006 Bulletin 2006/34**

(73) Proprietor: **KABUSHIKI KAISHA KOBE SEIKO SHO**
**Kobe-shi,**
**Hyogo 651-8585 (JP)**

(72) Inventors:
 • **Hatano, Hitoshi**
 **1-chome**
 **Nishi-ku**
 **Kobe-shi**
 **Hyogo 651-2271 (JP)**
 • **Yamashita, Ken**
 **Fujisawa-shi**
 **Kanagawa 251-0014 (JP)**

(74) Representative: **Müller-Boré & Partner**
**Patentanwälte PartG mbB**
**Friedenheimer Brücke 21**
**80639 München (DE)**

(56) References cited:
**FR-A- 2 740 715**

 • **PATENT ABSTRACTS OF JAPAN vol. 1997, no. 11, 28 November 1997 (1997-11-28) & JP 09 192881 A (KOBE STEEL LTD), 29 July 1997 (1997-07-29)**
 • **ICHIKAWA K ET AL: "TOUGHNESS AND CREEP STRENGTH OF MODIFIED 2.25CR-1MO STEEL WEL METAL" WELDING JOURNAL, AMERICAN WELDING SOCIETY, MIAMI, FL, US, vol. 74, no. 7, 1 July 1995 (1995-07-01), pages 230-S, XP000542810 ISSN: 0043-2296**
 • **SPENCER P N ET AL: "FRACTURE TOUGHNESS, FATIGUE CRACK PROPAGATION AND CREEP RUPTURE BEHAVIOUR IN THICK SECTION WELDMENTS OF 3CR-MO PRESSURE-VESSEL STEELS DEVELOPED FOR HIGH-TEMPERATURE/HIGH-PRESSURE HYDROGEN SERVICE" HIGH TEMPERATURE TECHNOLOGY, SCIENTIFIC LTD. GUILDFORD, UK, vol. 7, no. 1, 1 February 1989 (1989-02-01), pages 17-26, XP000005241**
 • **PATENT ABSTRACTS OF JAPAN vol. 010, no. 096 (M-469), 12 April 1986 (1986-04-12) & JP 60 231591 A (KOBE SEIKOSHO KK), 18 November 1985 (1985-11-18)**

**Description**

The present invention relates to a weld metal to be used for welding a high -strength steel material such as Cr - Mo - V steel (Cr: 2.0 to 3.25 mass% (referred to as %, hereinafter), Mo: 0.9 to 1.2%, V: 0.2 to 0.35%). More particularly, itpertains to technology for forming by arc welding method, a weld metal applicable to a steel material which is employed in cold districts and is required to have low temperature toughness.

As a raw material for structures such as boilers and chemical reaction vessels, there is used the above - mentioned Cr -Mo steel which contains Cr and/or Mo and is excellent in requisite characteristics such as heat resistance and pressure tightness taking into consideration the working environment of a high temperature and high pressure. In addition, in the case of being employed for the foregoing purpose, Cr -Mo steel is also required to be excellent in high temperature strength (particularly, high temperature creep strength ) along with toughness.

Various structures as mentioned above are constructed by a variety of arc welding methods and in particular, those having large size and/or thickness are generally constructed by submerged arc welding having favorable welding efficiency. Since there is a tendency in recent years that operational conditions are brought up to further high temperature and high pressure in order to contrive highly efficient operations of installations, the use of conventional steels becomes unpractical because of weld structures that have further large thickness, and thus markedly increased material costs and production expenses. Accordingly for the purpose of suppressing large thickness of structures under high temperature and high pressure, high - strength Cr - Mo steel incorporated with V is developed.

On the other hand, in the case of welding the above - mentioned steel material as a base material, a weld metal to be formed is required to be superior to previous ones in terms of strength at room temperature and elevated temperatures, toughness, creep strength, tempering brittleness resistance characteristic (to be lessened in brittleness in use in a high temperature environment) and SR cracking resistance (to be less liable to cause intergranular cracking due to precipitation aging). In particular, weld structures made of Cr - Mo - V steel have created a serious problem of intergranular cracking due to precipitation aging so - called SR cracking. Hence an important theme is that the Cr - Mo - V steel be excellent in such characteristics (SR cracking resistance).

In this connection, it is known in particular that regarding the characteristics required of weld metal for weld structure made of high - strength Cr - Mo - V steel, the toughness after an SR treatment and tempering brittleness resistance characteristic are improved by lowering oxygen content in the weld metal. For instance, Patent Literature 1 discloses that the toughness of the weld metal is enhanced through decreased oxygen content by bringing Si content in the weld metal up to at least 0. 10%.

On the other hand, Patent Literature 2 discloses that increased oxygen content in weld metal for high - strength Cr - Mo - steel increases intergranular surfaces by the precipitation of dense texture along grain boundaries, and thus enables the formation of a weld metal superior to a weld metal having lower oxygen content in terms of SR cracking resistance. This technology improves SR cracking resistance by bringing the oxygen content to 0. 030 to 0.060%, and compensates for toughness lowering by optimizing the contents of carbon and Mn in the weld metal.

As mentioned above, oxygen shows conflicting behavior in regard to toughness and SR cracking resistance, and therefore the control of oxygen content alone makes it difficult to reconcile both toughness and SR cracking resistance, whereby it follows that either of the characteristic deteriorates.

Investigations and research have previously been accumulated by the present inventors in order to improve both the characteristics of SR cracking resistance and toughness regarding a weld metal for high - strength Cr - Mo - steel. As one portion of the research, it has been discovered that a weld metal which is simultaneously excellent in toughness and SR cracking resistance can be steadily materialized by properly specifying the chemical composition of the weld metal and optimizing the texture thereof through regulation of SR conditions (stress relieving treatment conditions) without increasing the oxygen content in the weld metal. As the technological significance of the discovery and invention were recognized, the invention was previously applied for a patent (refer to Patent literature 3).

The development of the above - mentioned technology has enabled to realize the weld metal improved in both toughness and SR cracking resistance. However some problems remain unsolved in that a weld structure to be employed in further cold districts has not sufficient low temperature toughness.

[Patent literature 1] Japanese Patent Application Laid - Open No. 71196 / 1986 (Showa 61), Claim
[Patent literature 2] Japanese Patent Application Laid - Open No. 328292 / 1994 (Heisei 6), Claim
[Patent literature 3] Japanese Patent Application Laid - Open No. 192881 / 1997 (Heisei 9), Claim

FR 2 740 715 A1 describes a high strength Cr-Mo steel weld metal and a submerged arc welding method.

The object of the present invention that has been made under such circumstances is to provide a weld metal which is used for high - strength Cr - Mo - steel and which is improved in toughness (particularly low temperature toughness) and SR cracking resistance as well, while maintaining its high - temperature strength.

The gist and summary of the weld metal having enabled to solve the above - mentioned theme reside in a weld metal which is formed by an arc welding method and which comprises 0.02 to 0.10% of C (% by mass ; the same holds also hereinafter), 0.05 to 0.4% of Si, 0.3 to 1.0% of Mn, 0.8 to 3.25% of Cr, at most 2% (inclusive of 0%) of Mo , 0.30 to 1.0% of V, at most 0.03% of N, while suppressing the contents of Al, Ti and Ni to at most 0.03%, at most 0.03% and at most 0.40% respectively, wherein the sum total ([Mn] +[Ni]) of Mn content [Mn] and Ni content [Ni] is at most 1.2%, the balance is Fe and inevitable impurities, the contents of P, S, Sn, As and Sb among the inevitable impurities are suppressed each to atmost 0.01%, the content of O is suppressed to at most 0.040%, EV value as defined by the following formula (1) satisfies EV ≥ 0.00, and the number of carbides which have an equivalent circle diameter of at least 0.2 $\mu$m and which are present in non heat affected zone of the weld metal after being subjected to stress relieving annealing at 625°C for 10 hours is at most 1.0 number/$\mu$m$^2$

$$EV = [V] - ([C] / 12 + [N] / 14) \times 50.9 \text{ --------- (1)}$$

where [V], [C] and [N] represent the contents (mass%) of V, C and N, respectively.

The above - mentioned equivalent circle diameter is determined by a diameter of a circle the area of which is assumed to be equal to that of precipitate, paying attention to the size of the precipitate. It is also the circle diameter that is recognized by means of replica method on an observation surface with a transmission type electron microscope.

It is preferable as well to incorporate at need, in the weld metal according to the present invention, at least one species selected from the group consisting of (a) at most 0.10% (excluding 0%) of Nb, at most 0.10% (excluding 0%) of Zr, at most 0.10% (excluding 0%) of Hf and at most 0.10% (excluding 0%) of Ta ; (b) at most 2.0% (excluding 0%) of W and/or at most 2.0% (excluding 0%) of Co ; (c) at most 0.015% (excluding 0%) of B ; and the like element. According to the kind of the component to be incorporated, the characteristics of the weld metal are further improved.

FIG. 1 is across sectional view schematically illustrating bevel geometry of a base material to be used in working examples;

FIG. 2 is a graph showing SR conditions by plotting temperature in ordinate and period of time in abscissa; and

FIG. 3 is an explanatory figure showing the procedure of testing method for SR cracking resistance called ring cracking test.

Research and investigation were previously made by the present inventors on the cause of SR cracking. As a result, it was discovered that SR cracking resistance is lowered as cementites ($M_3C$) which precipitates in old prior austenite grain boundaries is precipitated in a large amount (refer to the Patent literature 3) . The precedently proposed technique by the present inventors has improved SR cracking resistance through decreasing $M_3C$ from the above-mentioned viewpoint. In this case, the $M_3C$ is a compound of M (metallic element) and C (carbon) in which M is constituted principally of Fe and Cr.

Nevertheless it has been proved that in order to further improve SR cracking resistance, lowering of other $M_7C_3$ and $M_{23}C_6$ which precipitate in lump form (M and C are as previously defined) is necessary as well as lowering of the cementite.

On the other hand, it has been thought that from the weld metal which is for high - strength Cr - Mo - steel and in which addition of V is indispensable, fine MX (M is mainly V) precipitates at the time of SR treatment, and accordingly such precipitates hinder the improvement in toughness (particularly, low temperature toughness) thereby making it difficult to further improve the toughness ; and also that since an increase in V to be added brings about an increase in the precipitate of MX, the toughness is conversely lowered.

However, research and investigations made by the present inventors proved that excessively incorporated amount of V against C and N { under-mentioned formula (1)} leads to an increase in an amount of V that forms a solid solution with weld metal matrix, causing large and coarse MX, whereby the toughness is markedly improved by reason of the foregoing. Moreover it has been discovered that it is possible to eliminate not only the $M_3C$ but also $M_7C_3$ and $M_{23}C_6$ almost entirely and thereby to improve not only the toughness but also SR cracking resistance. According to the present invention "M" in formula "MX" represents alloying metal elements such as V, Nb, Ti and/or Mo. "X" in formula "MX" represents C and/or N. In a preferred embodiment "MX" means the carbide, nitride or carbonitride having a crystal structure of sodium chloride structure.

In addition, it has also been proved that since SR cracking is most liable to take place in brittle zone at 625°C, the morphology of carbide precipitates when subjected to a heat treatment at 625°C for 10 hours (SR treatment) becomes an important requirement for improvement in the characteristics. The morphology of carbide precipitates in the weld metal, which is influenced not only by the chemical composition of the weld metal but also the cooling rate and deoxidizing state and the like, can not be unequivocally determined. In view of the above, investigations were made by the present inventors on the correlation among the morphology of carbide precipitates , SR cracking resistance and low temperature toughness on the basis of the morphology of carbide precipitates after the heat treatment at 625°C for 10 hours ( SR treatment). As a result, it has turned out that in the case where the number of large coarse precipitates each having an equivalent circle diameter of at least 0.2 $\mu$m is at most 1.0 number/$\mu$m$^2$, both SR cracking resistance and low temperature toughness are improved.

It is necessary in the weld metal according to the present invention to satisfy the above-mentioned requirements, and at the same time to properly regulate the fundamental chemical composition. The reasons for limiting the scope of each of the elements are as follows.

C: 0.02 to 0.10%

C, which exerts a great influence on quenching hardenability, is an important element for assuring toughness and strengths at room temperature and elevated temperature. The content of C in the weld metal, when being less than 0.02%, results in lowered strength, etc., whereas the content thereof, when being more than 0.10%, brings about excessively high strength, thus markedly lowers the toughness. Hence the content of C therein needs to be in the range of 0.02 to 0.10%. From the aspect of improving the characteristic, the lower and upper limits of the contents thereof are preferably 0.04% and 0.08%, respectively.

Si: 0.05 to 0.4%

Si, which has deoxidizing effect, exhibits an effect on controlling the amount of oxygen in the weld metal. In order to make Si to exhibit such effect, the content of Si needs to be at least 0.05%, but when exceeding 0.4% being excessively high, causes deterioration in tempering brittleness characteristics and SR cracking resistance, and besides brings about excessively high strength, thus contributing to lowered toughness. The lower and upper limits of the contents thereof are preferably 0.10% and 0.30%, respectively.

Mn: 0.3 to 1.0%

As is the case with C, Mn exerts effects on enhancing high temperature strength and toughness of the weld metal, and has a function of controlling oxygen amount in the weld metal by deoxidizing action. In order to make Mn to exhibit such effects, the content of Mn needs to be at least 0.3%, but when exceeding 1.2% being excessively high, causes deterioration in creep strength, tempering brittleness resistance characteristic and SR cracking resistance. Hence the content of Mn in the weld metal needs to be 0.3 to 1.0%, and the lower limit of the content thereof is preferably 0.5%.

Cr: 0.8 to 3.25%, Mo : at most 2.0% (inclusive of 0%)

Cr and Mo are each a fundamental component for high - strength 2.25 to 3% Cr - 1% Mo steel. When the content of Cr in the weld metal is less than 0.8% or more than 3.25%, or the content of Mo in the weld metal is more than 2.0%, the working effects of the present invention are recognized. However, the above -mentioned scope of the base - material components is not practically employed in a high temperature environment as an object. Therefore the content of Cr is set on 0.8 to 3.25%, and that of Mo on at most 2.0%. The lower and upper limits of the content of Cr are preferably 2.0% and 3.0%, respectively, while the upper limit of the content of Mo is preferably 1.5%. In the present invention, the use of Cr - Mo steel as a base material is fundamentally assumed, however a base material is not restricted to the Cr - Mo steel, but can be selected for use from steels such as Cr steel which exhibits the characteristics similar to those of the Cr - Mo steel. Thus the lower limit of the content of Mo is set on 0%.

V: 0.3 to 1.0%

V is a principal element which constitutes MX, and is an effective element for exhibiting an effect on improving creep characteristics, suppressing the formation of large coarse carbides such as $M_7C_3$ and $M_{23}C_6$ that are responsible for SR cracking, and improving SR cracking resistance. In order to make V to exhibit such effects, the content thereof needs to be at least 0.3%, but the content excessively exceeding 1.0% causes the MX to be unreasonably large and coarse, thereby losing the effect of improving the creep characteristics. Hence the content of V is set on 0.30 to 1.0%. The lower limit of the contents thereof is preferably 0.40%, more preferably 0.50%, while the upper limit thereof is preferably 0.80%, more preferably 0.70%.

N: at most 0.03 % (exclusive of 0%)

N exhibits an effect on enhancing the creep strength of the weld metal. However the content of N, when excessively exceeds 0.030%, results in deterioration in toughness. The upper limit of the content of N is preferably 0.015%.

Al: at most 0.03% (inclusive of 0%); Ti: at most 0.03 % (inclusive of 0%)

Al and Ti, which impair toughness of the weld metal, needs to be minimized. Any of the content of Al and that of Ti, when exceeding 0.03%, gives rise to markedly lowered toughness, and accordingly needs to be suppressed to at most 0.03%, preferably at most 0.01%.

Ni: at most 0.40 % (inclusive of 0%)

Ni has an action of promoting tempering brittleness, particularly intensifying the action when the content of Ni in the weld metal exceeds 0.40%, and accordingly the content of Ni therein needs to be at most 0.40%, preferably at most 0.20%.

Sum total of content of Mn [Mn] and content of Ni [Ni] ([Mn] + [Ni]): at most 1.2%

When the sum total of the content of Mn [Mn] and the content of Ni [Ni] ([Mn] + [Ni]) exceeds 1.2%, deterioration in tempering brittleness resistance characteristics becomes remarkable, and thus the upper limit is set on 1.2%. The sum total [Mn] + [Ni] is preferably at most 1.0%.

The fundamental chemical composition in the weld metal relating to the present invention is as described hereinbefore. The balance is composed of Fe and inevitable impurities, of which P, S, Sn, As, Sb and O are suppressed preferably as follows. The reasons for limiting the scope of each of the impurities are as follows.

P, S, Sn, As and Sb: each at most 0.01%

These elements are each an impurity which is inevitably mingled in the weld metal. High contents thereof are responsible for occurrence of SR cracking and tempering brittleness. Accordingly P, S, Sn, As and Sb contained as inevitable impurities in the weld metal are each suppressed to at most 0.01%, preferably at most 0.006%.,

O: at most 0.040%

O is a detrimental component which mingles in the weld metal, and worsens toughness. In particular when the content of O exceeds 0.040%, the toughness is greatly worsened, and hence the upper limit thereof is set on 0.040%. The improvement in the toughness increases with a decrease in the content of O. However in order to prevent deterioration in welding workability such as poor bead form, the lower limit thereof is set on 0.020%, approximately.

It is preferable as well to incorporate at need, in the weld metal according to the present invention, at least one species selected from the group consisting of (a) at most 0.10% (exclusive of 0%) of Nb, at most 0.10% (exclusive of 0%) of Zr, at most 0.10% (exclusive of 0%) of Hf and at most 0.10% (exclusive of 0%) of Ta ; (b) at most 2.0% (exclusive of 0%) of W and/or at most 2.0% (exclusive of 0%) of Co ; (c) at most 0.015% (exclusive of 0%) of B ; and the like element. According to the kind of the component to be incorporated, the characteristics of the weld metal are further improved.

At least one species selected from the group consisting of at most 0.10% (exclusive of 0%) of Nb, at most 0.10% (exclusive of 0%) of Zr, at most 0.10% (exclusive of 0%) of Hf and at most 0.10% (exclusive of 0%) of Ta

By incorporating at least one of Nb, Zr, Hf and Ta in the weld metal, there is obtainable an effect on further improving SR cracking resistance of the weld metal. These elements enhance Cr activity and lower C activity, and the precipitation of $M_3C$, $M_7C_3$ and $M_{23}C_6$ is markedly suppressed, thereby enabling to improve SR cracking resistance. Nevertheless any of the above -mentioned elements, when the content thereof exceeds 0.10%, gives rise to unreasonably high strength and lowered toughness. For this reason in the case of incorporating any of the elements, the content thereof is preferably at most 0.10%. Preferable lower limit for each is about 0.05%.

W: at most 2.0% (exclusive of 0%) and/ or Co; at most 2.0% (exclusive of 0%)

By incorporating at least one of W and Co in the weld metal, strengths at room temperature and elevated temperature and creep strength can further be enhanced in comparison with incorporation of V alone. However any of the elements in question, when the content thereof exceeds 2.0%, gives rise to unreasonably high strength and lowered toughness. For this reason, in the case of incorporating any of the elements, the content thereof is preferably at most 2.0%. Preferable lower limit for each is about 1.5%.

B: at most 0.015% (exclusive of 0%)

Although B exerts an effect on stabilizing improving toughness, content thereof exceeding 0.015% brings about not only unreasonably high strength and lowered toughness, but also high susceptibility to high temperature cracking upon welding. For this reason, in the case of incorporating B, the content thereof is preferably at most0.015%. Preferable lower limit of B is about 0.010%.

Importance is attached also to the requirement that EV value as defined by the following formula (1) satisfies $EV \geq 0.00$, and the content of the carbide which has an equivalent circle diameter of at least 0.2 $\mu$m and which is present in non heat affected zone of the weld metal after being subjected to stress relieving annealing at 625°C for 10 hours is atmost 1.0 number/$\mu$m$^2$,

where

$$EV = [V] - ([C] / 12 + [N] / 14) \times 50.9 \text{ ------- } (1)$$

where [V], [C] and [N] represent the contents (mass%) of V, C and N, respectively.

The EV as defined by the formula (1) points out the degree of excess V for C and N. The EV, when being 0.00 or greater, causes excess V and large coarseMX, enabling to improve toughness and lowers the compounds that worsen SR cracking resistance such as $M_7C_3$ and $M_{23}C_6$. The EV is preferably at least 0.10, more preferably at least 0.20. Conversely unreasonably high EV brings about deterioration in creep strength, and hence the upper limit is set preferably on 0. 65, more preferably on at most 0.50.

SR cracking resistance deteriorates by the presence of carbides having an equivalent circle diameter of 0.2$\mu$m or larger. The number of such carbides in excess of 1.0 number/$\mu$m$^2$ leads to incapability of assuring desirable SR cracking resistance. In view of the foregoing, the number of such carbides needs to be at most 1.0 number/$\mu$m$^2$, preferably at most 0.5 number/$\mu$m$^2$, more preferably 0.0 number/$\mu$m$^2$.

A welding method on forming the weld metal in the present invention is not specifically limited provided that it is an arc welding method, but may be selected for application from submerged arc welding (SAW) as will be stated hereinafter in the working examples, shield metal arc welding (SMAW), tungsten inert gas (TIG) welding and gas shield arc welding (MAG, MIG) and the like.

In the present invention as described hereinbefore, the characteristics of the weld metal is improved by properly controlling chemical composition of the weldmetal and the number of carbides. The chemical composition of the weld metal is influenced by the welding conditions upon arc welding such as the chemical composition of welding wires, welding current, welding voltage and wire extension, and besides the chemical composition of base material, bevel geometry and the like, while the welding conditions are influenced by the chemical composition of welding wires. For these reasons, the ranges of the chemical composition of weld wires, welding conditions, the chemical composition of base material and the like for the purpose of assuring the weld metal composition according to the present invention are not unequivocally determined. Inbrief, the objects of the present invention are achieved by combining the above - mentioned factors so as to obtain the weld metal as stipulated according to the present invention.

The working effects and advantages of the present invention are summarized in the following. The invention has made it possible to realize high - strength weld metal for Cr - Mo steel by improving not only toughness, particularly low temperature toughness but also SR cracking resistance while assuring high temperature strength, and by optimizing the chemical composition as described hereinbefore so as to decrease the number of carbides present in non heat affected zone of the weld metal.

In the following, the present invention will be described in more detail with reference to working examples, which however shall never limit the invention thereto. Any of modification in design in the light of the above - or under - mentioned gist or summary falls within the scope of the present invention.

Example 1

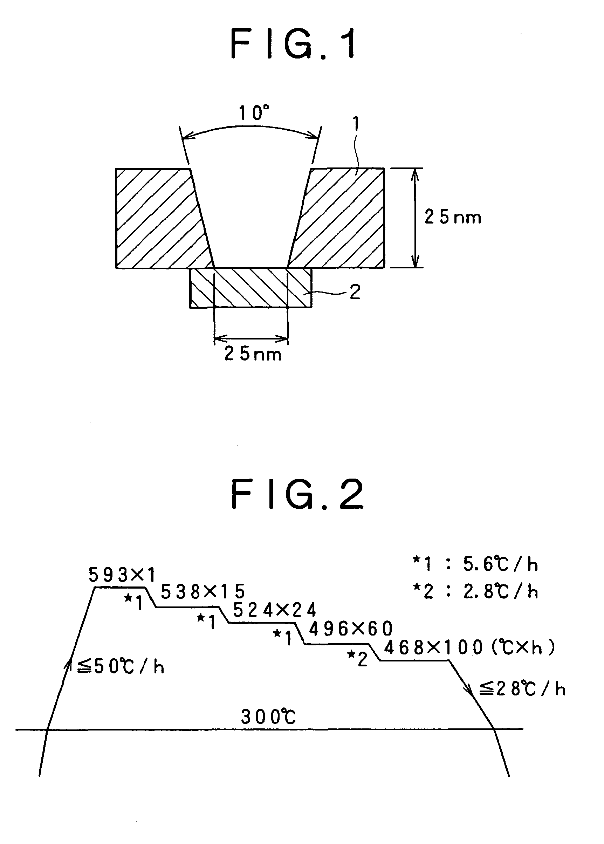

FIG. 1 is a cross sectional view schematically showing bevel geometry of base metal 1 to be used in the present invention, which is as shown in FIG. 1, has a bevel in the form of "V" and is equipped beneath the bevel with a backing plate 2 having the chemical composition same as that of the weld base metal 1.

In the Example, the angle of bevel in the form of "V" was set at 10 degrees, the width of gap where the backing plate is located on the underside was set at 25mm, and the thickness of the base metal 1 was set at 25 mm. The chemical compositions of the base metal used therein are given in Table 1.

Table 1

| Symbol | Chemical compositions (% by mass) of base materials | | | | | | | | | |
|---|---|---|---|---|---|---|---|---|---|---|
| | C | Si | Mn | P | S | Cr | Mo | V | Nb | Fe |
| P1 | 0.11 | 0.07 | 0.56 | 0.004 | 0.002 | 2.39 | 1.00 | 0.32 | 0.025 | Bal. |
| P2 | 0.12 | 0.08 | 0.55 | 0.005 | 0.002 | 3.01 | 0.99 | 0.42 | 0.023 | Bal. |

Weld metals were prepared by using the weld base metal 1 of bevel geometry shown in FIG. 1, combining various bond fluxes having chemical compositions shown in the following Table 2 with solid wires having chemical compositions shown in the following Table 3 and carrying out welding under the welding conditions (tandem welding system) indicated in the following Table 4. The chemical compositions of the weld metal thus obtained are given in the following Table 5.

Table 2

| Symbol | Chemical compositions (% by mass) of bond flux | | | | | | |
|---|---|---|---|---|---|---|---|
| | $S_iO_2$ | MgO | $Al_2O_3$ | $CaF_2$ | $CaCO_3$ | P | Others |
| F1 | 12 | 32 | 17 | 0.04 | 0.04 | 0.002 | 2 |

Table 3

Chemical compositions (% by mass) of solid wires

| Symbol | C | Si | Mn | P | S | Cr | Mo | Ni | Al | Ti | V | Sn | Sb | As | N | O | Others |
|---|---|---|---|---|---|---|---|---|---|---|---|---|---|---|---|---|---|
| W1 | 0.08 | 0.22 | 0.66 | 0.007 | 0.003 | 2.43 | 1.04 | 0.12 | 0.006 | 0.003 | 0.65 | 0.002 | 0.002 | 0.001 | 0.015 | 0.002 | - |
| W2 | 0.09 | 0.27 | 0.64 | 0.006 | 0.003 | 2.45 | 1.02 | 0.12 | 0.007 | 0.002 | 0.61 | 0.002 | 0.002 | 0.001 | 0.013 | 0.002 | Nb: 0.025 |
| W3 | 0.09 | 0.25 | 0.65 | 0.006 | 0.005 | 2.42 | 1.01 | 0.12 | 0.007 | 0.003 | 0.63 | 0.002 | 0.002 | 0.001 | 0.013 | 0.002 | W: 0.73 |
| W4 | 0.08 | 0.22 | 0.69 | 0.005 | 0.006 | 2.47 | 1.06 | 0.12 | 0.006 | 0.003 | 0.60 | 0.002 | 0.002 | 0.001 | 0.014 | 0.002 | Co: 0.66 |
| W5 | 0.09 | 0.21 | 0.66 | 0.006 | 0.002 | 2.48 | 1.05 | 0.12 | 0.007 | 0.003 | 0.63 | 0.002 | 0.002 | 0.001 | 0.016 | 0.002 | Zr: 0.01 |
| W6 | 0.00 | 0.21 | 0.72 | 0.006 | 0.003 | 2.51 | 1.02 | 0.12 | 0.007 | 0.002 | 0.62 | 0.002 | 0.002 | 0.001 | 0.013 | 0.002 | Hf: 0.04 |
| W7 | 0.07 | 0.34 | 0.74 | 0.005 | 0.003 | 2.48 | 1.04 | 0.12 | 0.008 | 0.002 | 0.62 | 0.002 | 0.002 | 0.001 | 0.014 | 0.002 | Ta: 0.06 |
| W8 | 0.08 | 0.22 | 0.69 | 0.005 | 0.004 | 2.45 | 1.06 | 0.12 | 0.007 | 0.003 | 0.60 | 0.002 | 0.002 | 0.001 | 0.019 | 0.002 | B: 0.0059 |
| W9 | 0.08 | 0.29 | 0.74 | 0.005 | 0.002 | 2.44 | 1.04 | 0.12 | 0.007 | 0.003 | 0.49 | 0.002 | 0.002 | 0.001 | 0.019 | 0.002 | - |
| W10 | 0.04 | 0.29 | 1.14 | 0.005 | 0.002 | 2.49 | 1.02 | 0.21 | 0.006 | 0.002 | 0.65 | 0.002 | 0.002 | 0.001 | 0.013 | 0.002 | - |
| W11 | 0.09 | 0.22 | 0.67 | 0.006 | 0.005 | 3.15 | 1.01 | 0.12 | 0.008 | 0.002 | 0.66 | 0.002 | 0.002 | 0.001 | 0.014 | 0.002 | - |
| W12 | 0.10 | 0.21 | 0.67 | 0.007 | 0.002 | 2.46 | 1.03 | 0.12 | 0.006 | 0.002 | 0.67 | 0.002 | 0.002 | 0.001 | 0.014 | 0.002 | - |
| W13 | 0.08 | 0.25 | 0.67 | 0.006 | 0.002 | 1.51 | 0.52 | 0.12 | 0.007 | 0.002 | 0.78 | 0.002 | 0.002 | 0.001 | 0.014 | 0.002 | - |
| W14 | 0.06 | 0.26 | 0.74 | 0.005 | 0.003 | 2.51 | 1.05 | 0.12 | 0.007 | 0.002 | 0.64 | 0.002 | 0.002 | 0.001 | 0.015 | 0.002 | - |
| W15 | 0.09 | 0.27 | 0.69 | 0.006 | 0.003 | 2.42 | 1.01 | 0.12 | 0.022 | 0.012 | 0.62 | 0.002 | 0.002 | 0.001 | 0.032 | 0.002 | - |
| W16 | 0.08 | 0.26 | 0.65 | 0.006 | 0.002 | 2.49 | 1.41 | 0.12 | 0.007 | 0.002 | 0.65 | 0.002 | 0.002 | 0.001 | 0.007 | 0.002 | - |
| W17 | 0.18 | 0.26 | 0.66 | 0.005 | 0.002 | 2.49 | 1.02 | 0.12 | 0.008 | 0.002 | 0.74 | 0.002 | 0.002 | 0.001 | 0.015 | 0.002 | - |
| W18 | 0.07 | 0.27 | 0.68 | 0.007 | 0.003 | 2.45 | 1.02 | 0.12 | 0.007 | 0.002 | 0.29 | 0.002 | 0.002 | 0.001 | 0.016 | 0.002 | - |
| W19 | 0.07 | 0.36 | 1.06 | 0.006 | 0.002 | 2.45 | 1.04 | 0.35 | 0.007 | 0.002 | 0.66 | 0.002 | 0.002 | 0.001 | 0.019 | 0.002 | - |
| W20 | 0.07 | 0.64 | 0.74 | 0.005 | 0.004 | 2.49 | 1.04 | 0.12 | 0.008 | 0.002 | 0.62 | 0.002 | 0.002 | 0.001 | 0.013 | 0.002 | - |
| W21 | 0.10 | 0.28 | 1.63 | 0.005 | 0.005 | 2.48 | 1.01 | 0.12 | 0.006 | 0.002 | 0.64 | 0.002 | 0.002 | 0.001 | 0.020 | 0.002 | - |
| W22 | 0.07 | 0.28 | 0.74 | 0.007 | 0.004 | 2.43 | 1.04 | 0.12 | 0.006 | 0.032 | 0.61 | 0.002 | 0.002 | 0.001 | 0.013 | 0.002 | - |
| W23 | 0.08 | 0.26 | 0.69 | 0.005 | 0.006 | 2.45 | 1.04 | 0.12 | 0.040 | 0.002 | 0.62 | 0.002 | 0.002 | 0.001 | 0.020 | 0.002 | - |
| W24 | 0.11 | 0.26 | 0.66 | 0.006 | 0.002 | 2.43 | 1.03 | 0.12 | 0.007 | 0.002 | 0.39 | 0.002 | 0.002 | 0.001 | 0.014 | 0.002 | - |

(continued)

| Symbol | Chemical compositions (% by mass) of solid wires | | | | | | | | | | | | | | | | |
|---|---|---|---|---|---|---|---|---|---|---|---|---|---|---|---|---|---|
| | C | Si | Mn | P | S | Cr | Mo | Ni | Al | Ti | V | Sn | Sb | As | N | O | Others |
| W25 | 0.11 | 0.26 | 0.66 | 0.006 | 0.002 | 2.43 | 1.03 | 0.12 | 0.007 | 0.002 | 0.29 | 0.002 | 0.002 | 0.001 | 0.014 | 0.002 | - |
| W26 | 0.10 | 0.28 | 0.75 | 0.007 | 0.004 | 2.92 | 0.87 | 0.12 | 0.006 | 0.002 | 1.22 | 0.002 | 0.002 | 0.001 | 0.006 | 0.002 | - |
| W27 | 0.08 | 0.29 | 0.66 | 0.005 | 0.002 | 2.44 | 1.02 | 0.12 | 0.008 | 0.002 | 0.62 | 0.002 | 0.002 | 0.001 | 0.014 | 0.002 | Nb: 0.113 |
| W28 | 0.08 | 0.32 | 0.22 | 0.006 | 0.003 | 2.47 | 1.00 | 0.12 | 0.007 | 0.003 | 0.66 | 0.002 | 0.002 | 0.001 | 0.014 | 0.002 | - |
| W29 | 0.09 | 0.27 | 0.66 | 0.006 | 0.005 | 2.47 | 1.03 | 0.56 | 0.007 | 0.002 | 0.64 | 0.002 | 0.002 | 0.001 | 0.014 | 0.002 | - |

Table 4

| SAW welding conditions | | | | | | |
|---|---|---|---|---|---|---|
| Polarity | Electrode | Current (A) | Voltage (V) | Welding speed (cm/min) | Heat input (kJ/cm) | Preheat/Interpass temperature (°C) |
| AC | Precedent | 510 | 28 | 55 | 33.9 | 220 - 225 |
| | Subsequent | 560 | 30 | | | |

Table 5

Chemical compositions of weld metals (% by mass)

| No. | Base material | Wire used | C | Si | Mn | P | S | Cr | Mo | Ni | Al | Ti | V | Sn | Sb | As | N | O | Others |
|---|---|---|---|---|---|---|---|---|---|---|---|---|---|---|---|---|---|---|---|
| 1 | P1 | W1 | 0.07 | 0.20 | 0.59 | 0.005 | 0.002 | 2.42 | 1.00 | 0.09 | 0.005 | 0.002 | 0.61 | 0.002 | 0.002 | 0.001 | 0.011 | 0.024 | - |
| 2 | P1 | W2 | 0.07 | 0.19 | 0.60 | 0.005 | 0.002 | 2.40 | 1.02 | 0.11 | 0.005 | 0.002 | 0.58 | 0.002 | 0.002 | 0.001 | 0.012 | 0.023 | Nb: 0.025 |
| 3 | P1 | W3 | 0.06 | 0.20 | 0.61 | 0.005 | 0.002 | 2.39 | 1.00 | 0.12 | 0.004 | 0.001 | 0.60 | 0.002 | 0.002 | 0.001 | 0.009 | 0.024 | W: 0.61 |
| 4 | P1 | W4 | 0.07 | 0.21 | 0.60 | 0.005 | 0.002 | 2.40 | 0.99 | 0.13 | 0.005 | 0.002 | 0.61 | 0.002 | 0.002 | 0.001 | 0.012 | 0.023 | Co: 0.65 |
| 5 | P1 | W5 | 0.06 | 0.20 | 0.62 | 0.006 | 0.002 | 2.41 | 1.00 | 0.12 | 0.005 | 0.002 | 0.60 | 0.002 | 0.002 | 0.001 | 0.011 | 0.024 | Zr: 0.010 |
| 6 | P1 | W6 | 0.07 | 0.21 | 0.60 | 0.005 | 0.002 | 2.40 | 1.00 | 0.11 | 0.005 | 0.002 | 0.62 | 0.002 | 0.002 | 0.001 | 0.010 | 0.025 | Hf: 0.035 |
| 7 | P1 | W7 | 0.06 | 0.20 | 0.58 | 0.005 | 0.002 | 2.40 | 0.98 | 0.12 | 0.005 | 0.002 | 0.59 | 0.002 | 0.002 | 0.001 | 0.012 | 0.024 | Ta: 0.052 |
| 8 | P1 | W8 | 0.07 | 0.21 | 0.60 | 0.006 | 0.002 | 2.41 | 1.00 | 0.11 | 0.005 | 0.002 | 0.60 | 0.002 | 0.002 | 0.001 | 0.011 | 0.025 | B: 0.0032 |
| 9 | P1 | W9 | 0.07 | 0.20 | 0.60 | 0.005 | 0.002 | 2.40 | 1.01 | 0.12 | 0.005 | 0.002 | 0.44 | 0.002 | 0.002 | 0.001 | 0.012 | 0.028 | - |
| 10 | P1 | W10 | 0.03 | 0.19 | 0.95 | 0.005 | 0.002 | 2.42 | 1.00 | 0.21 | 0.004 | 0.002 | 0.59 | 0.002 | 0.002 | 0.001 | 0.012 | 0.027 | - |
| 11 | P1 | W11 | 0.07 | 0.20 | 0.61 | 0.005 | 0.002 | 3.10 | 1.01 | 0.11 | 0.005 | 0.002 | 0.60 | 0.002 | 0.002 | 0.001 | 0.011 | 0.028 | - |
| 12 | P1 | W12 | 0.09 | 0.21 | 0.60 | 0.005 | 0.002 | 2.39 | 1.00 | 0.12 | 0.005 | 0.002 | 0.61 | 0.002 | 0.002 | 0.001 | 0.012 | 0.029 | - |
| 13 | P1 | W13 | 0.07 | 0.20 | 0.61 | 0.004 | 0.002 | 1.50 | 0.49 | 0.13 | 0.004 | 0.002 | 0.75 | 0.002 | 0.002 | 0.001 | 0.009 | 0.028 | - |
| 14 | P1 | W14 | 0.05 | 0.22 | 0.60 | 0.005 | 0.002 | 2.40 | 1.00 | 0.12 | 0.005 | 0.001 | 0.58 | 0.002 | 0.002 | 0.001 | 0.012 | 0.035 | - |
| 15 | P1 | W15 | 0.07 | 0.20 | 0.61 | 0.006 | 0.002 | 2.38 | 1.01 | 0.12 | 0.015 | 0.009 | 0.60 | 0.002 | 0.002 | 0.001 | 0.018 | 0.028 | - |
| 16 | P1 | W16 | 0.07 | 0.19 | 0.60 | 0.005 | 0.002 | 2.40 | 1.35 | 0.12 | 0.005 | 0.002 | 0.61 | 0.002 | 0.002 | 0.001 | 0.0053 | 0.027 | - |
| 17 | P2 | W18 | 0.06 | 0.20 | 0.60 | 0.005 | 0.002 | 2.59 | 0.99 | 0.12 | 0.004 | 0.002 | 0.32 | 0.002 | 0.002 | 0.001 | 0.010 | 0.025 | - |
| 18 | P1 | W17 | 0.14 | 0.20 | 0.60 | 0.005 | 0.002 | 2.40 | 1.00 | 0.12 | 0.005 | 0.002 | 0.74 | 0.002 | 0.002 | 0.001 | 0.012 | 0.024 | - |
| 19 | P1 | W18 | 0.05 | 0.19 | 0.60 | 0.006 | 0.002 | 2.41 | 0.99 | 0.12 | 0.005 | 0.002 | 0.28 | 0.002 | 0.002 | 0.001 | 0.011 | 0.023 | - |
| 20 | P1 | W19 | 0.07 | 0.20 | 0.95 | 0.005 | 0.002 | 2.40 | 1.02 | 0.35 | 0.005 | 0.002 | 0.59 | 0.002 | 0.002 | 0.001 | 0.012 | 0.024 | - |
| 21 | P1 | W20 | 0.07 | 0.55 | 0.60 | 0.005 | 0.002 | 2.42 | 1.00 | 0.12 | 0.005 | 0.002 | 0.60 | 0.002 | 0.002 | 0.001 | 0.011 | 0.023 | - |
| 22 | P1 | W21 | 0.07 | 0.20 | 1.42 | 0.005 | 0.002 | 2.40 | 1.01 | 0.11 | 0.005 | 0.002 | 0.60 | 0.002 | 0.002 | 0.001 | 0.012 | 0.043 | - |
| 23 | P1 | W22 | 0.07 | 0.22 | 0.60 | 0.006 | 0.002 | 2.41 | 1.00 | 0.12 | 0.004 | 0.032 | 0.59 | 0.002 | 0.002 | 0.001 | 0.011 | 0.024 | - |
| 24 | P1 | W23 | 0.07 | 0.20 | 0.61 | 0.005 | 0.002 | 2.40 | 1.02 | 0.12 | 0.033 | 0.001 | 0.60 | 0.002 | 0.002 | 0.001 | 0.012 | 0.023 | - |

(continued)

| No. | Base material | Wire used | Chemical compositions of weld metals (% by mass) | | | | | | | | | | | | | | | | |
|-----|---------------|-----------|------|------|------|-------|-------|------|------|------|-------|-------|------|-------|-------|-------|-------|-------|---------|
| | | | C | Si | Mn | P | S | Cr | Mo | Ni | Al | Ti | V | Sn | Sb | As | N | O | Others |
| 25 | P1 | W24 | 0.09 | 0.19 | 0.61 | 0.005 | 0.002 | 2.42 | 1.00 | 0.12 | 0.005 | 0.002 | 0.35 | 0.002 | 0.002 | 0.001 | 0.010 | 0.024 | - |
| 26 | P1 | W25 | 0.09 | 0.20 | 0.60 | 0.006 | 0.002 | 2.40 | 0.99 | 0.12 | 0.005 | 0.002 | 0.28 | 0.002 | 0.002 | 0.001 | 0.012 | 0.023 | - |
| 27 | P1 | W26 | 0.09 | 0.22 | 0.62 | 0.005 | 0.002 | 2.79 | 0.86 | 0.11 | 0.005 | 0.002 | 1.20 | 0.002 | 0.002 | 0.001 | 0.005 | 0.024 | - |
| 28 | P1 | W27 | 0.07 | 0.20 | 0.60 | 0.005 | 0.002 | 2.40 | 1.00 | 0.12 | 0.005 | 0.002 | 0.60 | 0.002 | 0.002 | 0.001 | 0.012 | 0.023 | Nb: 0.11 |
| 29 | P1 | W28 | 0.07 | 0.19 | 0.20 | 0.005 | 0.002 | 2.38 | 1.01 | 0.12 | 0.004 | 0.002 | 0.61 | 0.002 | 0.002 | 0.001 | 0.012 | 0.024 | - |
| 30 | P1 | W29 | 0.07 | 0.20 | 0.61 | 0.005 | 0.002 | 2.40 | 1.00 | 0.55 | 0.005 | 0.002 | 0.60 | 0.002 | 0.002 | 0.001 | 0.012 | 0.024 | - |

Subsequently the weld metals thus obtained were heat treated at 625°C for 10 hours (SR treatment, temperature raising / lowering rate being 25 °C/ hr), and the resultant carbides were observed through TEM - extraction replica method for non heat affected zone of final pass of the weld metals after the SR treatment. At this time, a region of $8.5\mu m^2$ was photographed for 10 visual fields at 15000 magnification to count the number of carbides having an equivalent circle diameter of $0.2\mu m$ or larger by the use of an image analysis software.

Subsequently test pieces intended for conducting various mechanical characteristics testing were collected from part of the weld metal, in which the contents of the characteristics testing included tensile tests at room temperature (20°C) and a high temperature, Charpy impact test, tempering brittleness test and creep rupture test, making a total of four tests. The test pieces used for these tests, which were of the shape as pointed out in the following Table 6, were collected from the middle of plate thickness of the testing material that was heat treated under SR treatment as combinationally shown in Table 6.

Table 6

| Contents of test | | SR treatment conditions (°C x hour) | Test piece collection position | Test piece shape |
|---|---|---|---|---|
| Tensile test | Room temperature | 700 x 26 | Middle of plate thickness | JIS Z 3111 No. A1 |
| | 454°C | 700 x 26 | | JIS G 0567 (6 mmΦ) |
| Charpy impact test | | 700 x 7 | | JIS Z 3111 No. 4 |
| Tempering brittleness test | | 700 x 7 + step cooling | | JIS Z 3111 No. 4 |
| Creep rupture test | | 700 x 26 | | JIS Z 2273 (6 mmΦ) |

Among the above - mentioned testing, the tempering brittleness test was subjected to a step cooling treatment in addition to the prescribed SR treatment.

FIG. 2 is a graph showing the step cooling treatment by plotting temperature in ordinate and time in abscissa. As illustrated in FIG. 2, when the temperature of a test piece exceeded 300°C, heating conditions were regulated so that the temperature rise rate was made to 50°C / hr or less, and the test pieces were heated up to 593°C and maintained thereat for one hour. Thereafter in the same manner as above, the test pieces were maintained at 538°C for 15 hours, at 524°C for 24 hours and at 496°C for 60 hours, while in this cooling stage the rate of cooling the test pieces were regulated to 5.6°C/hr. Further the test pieces that had been maintained at 496°C were cooled at 2.8°C/ hr down to 468°C, at which it they were maintained for 100 hours. Subsequently the test pieces were cooled at a cooling rate of 28°C/ hr down to 300°C.

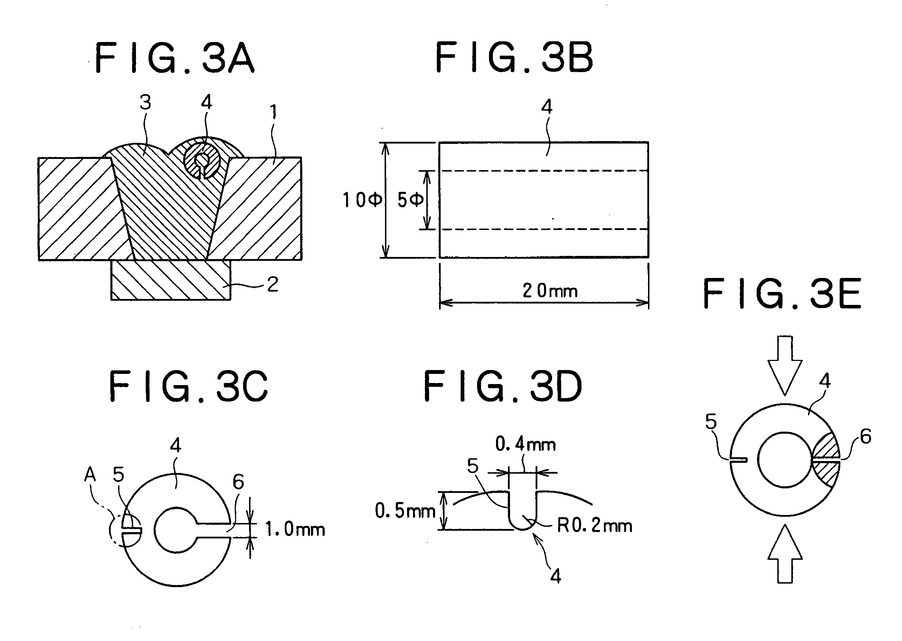

In addition, cylindrical test pieces for the purpose of ring cracking test to evaluate SR cracking resistance were collected from the above - stated weld metal. FIG. 3 (a) is a cross sectional view schematically illustrating the position and direction of the collected cylindrical test pieces from the weld metal ; FIG. 3 (b) is a side view illustrating the shape of the cylindrical test pieces, FIG. 3 (c) is a cross sectional view of the same, FIG. 3 (d) is a cross sectional view enlargingly illustrating a notch portion A in the cross sectional view {FIG. 3 (c)}, and FIG. 3 (e) is an outlined explanatory view illustrating a testing method for ring cracking by using the cylindrical test pieces.

As illustrated in FIG. 3 (a), cylindrical test pieces 4 each having a notch and a slit were collected from the upside of final bead of the weld metal 3 that was formed by being encircled with the base material 1, the backing metal plate 2 and the bevel portion so that the notch 5 and the slit 6 as shown in FIG. 3 (c) were positioned on the upside and underside of non heat affected zone for the weld metal, respectively.

As illustrated in FIG. 3 (b), the cylindrical test pieces 4 measured 20 mm of longitudinal length, 10 mm of outside diameter and 5 mm of inside diameter. As illustrated in FIG. 3 (c), the cylindrical test pieces 4 were equipped each with a slit 6 having 1.0 mm width and reaching the hollow portion inside the cylinder in the longitudinal direction of the test pieces 4, and with a notch 5 in the longitudinal direction thereof on the outer periphery of the opposite side of the slit 6.

Further as illustrated in FIG. 3 (d) which is a cross sectional view enlargingly illustrating a notch portion A in the cross sectional view {FIG. 3 (c)}, the notch 5 was a U - shaped groove measuring 0.5 mm of depth, 0.4 mm of width and 0.2 mm of curvature radius at the bottom. The test pieces in such a shape were used for the ring cracking test.

In the ring cracking test, bending stress was applied to the cylindrical test pieces 4 in the direction shown by arrows as illustrated in FIG. 3 (e) with reference to " Research on stress relief annealing cracking" second edition " (by Kiuchi et al, bulletin of Institute for Welding, vol. 33, No. 9 (1964), p.718), the slit 6 of each of the test pieces was subjected to TIG welding without the use of a filler metal, and a heat treatment was performed with residual tensile stress being caused as such in the bottom of the U - shaped groove. Thus SR cracking property was judged by the existence of SR cracking in the bottom of the U - shaped groove.

In the following, some description will be given of evaluation criteria in a variety of evaluation testing. In the first place regarding strength, test pieces having a tensile strength at room temperature (20°C) of at least 600 N / mm$^2$ and that at a high temperature (454°C) of at least 507 N / mm$^2$ were regarded as being good. Concerning the Charpy impact test which evaluates toughness and tempering brittleness characteristics, test pieces having a transition temperature vTr at which absorption energy after SR treatment indicated 55 J being -80°C or lower and also having difference between the transition temperature vTr and the transition temperature vTr' at which absorption energy after step cooling indicated 55 J ; $\Delta$vTr (vTr - vTr') being 20°C or lower were regarded as being good.

Concerning the creep rupture test, test pieces having creep strength under 550°C and 1000 hours being at least 210 N / mm$^2$ were regarded as being good. Regarding the ring cracking test evaluating SR cracking resistance, test pieces which didn't generate cracking in the bottom of U - shaped groove after subjected to SR treatment were regarded as being good, and test pieces which generated cracking therein after SR treatment were regarded as being failure. The results of testing are collectively given in Table 7.

Table 7

| No. | EV value (% by mass) | [Mn]+[Ni] (% by mass) | Number of carbides (pieces/$\mu$m$^2$) | Tensile strength (Mpa) | | vTr (°C) | vTr (°C) | $\Delta$vTr (°C) | SR cracking resistance | Creep characteristics | Comprehensive evaluation |
|---|---|---|---|---|---|---|---|---|---|---|---|
| | | | | Room temperature | 454°C | | | | | | |
| 1 | 0.273 | 0.68 | 0.0 | 635 | 532 | -90 | -75 | 15 | Good | 221 | Good |
| 2 | 0.239 | 0.71 | 0.0 | 657 | 554 | -81 | -65 | 16 | Good | 259 | Good |
| 3 | 0.313 | 0.73 | 0.0 | 645 | 541 | -85 | -69 | 16 | Good | 234 | Good |
| 4 | 0.269 | 0.73 | 0.0 | 641 | 533 | -88 | -71 | 17 | Good | 226 | Good |
| 5 | 0.306 | 0.74 | 0.0 | 637 | 531 | -85 | -74 | 11 | Good | 224 | Good |
| 6 | 0.287 | 0.71 | 0.0 | 635 | 529 | -84 | -75 | 9 | Good | 226 | Good |
| 7 | 0.292 | 0.70 | 0.0 | 641 | 542 | -81 | -64 | 17 | Good | 242 | Good |
| 8 | 0.263 | 0.71 | 0.0 | 645 | 551 | -88 | -79 | 9 | Good | 243 | Good |
| 9 | 0.099 | 0.72 | 0.0 | 657 | 559 | -83 | -71 | 12 | Good | 253 | Good |
| 10 | 0.419 | 1.16 | 0.0 | 605 | 511 | -81 | -62 | 19 | Good | 213 | Good |
| 11 | 0.263 | 0.72 | 0.0 | 621 | 521 | -87 | -75 | 12 | Good | 214 | Good |
| 12 | 0.185 | 0.72 | 0.0 | 635 | 536 | -83 | -71 | 12 | Good | 234 | Good |
| 13 | 0.420 | 0.74 | 0.0 | 651 | 541 | -81 | -65 | 16 | Good | 256 | Good |
| 14 | 0.324 | 0.72 | 0.0 | 631 | 529 | -80 | -68 | 12 | Good | 225 | Good |
| 15 | 0.238 | 0.73 | 0.0 | 642 | 543 | -84 | -71 | 13 | Good | 237 | Good |
| 16 | 0.294 | 0.72 | 0.0 | 615 | 513 | -91 | -78 | 13 | Good | 216 | Good |
| 17 | 0.029 | 0.72 | 0.4 | 641 | 536 | -80 | -61 | 19 | Good | 235 | Good |
| 18 | 0.103 | 0.72 | - | 687 | 579 | -75 | -60 | 15 | - | - | Failure |
| 19 | 0.028 | 0.72 | 1.2 | 651 | 546 | -70 | -61 | 9 | Failure | - | Failure |
| 20 | 0.249 | 1.30 | - | 634 | 536 | -85 | -55 | 30 | - | - | Failure |
| 21 | 0.263 | 0.72 | - | 639 | 542 | -81 | -49 | 32 | - | - | Failure |
| 22 | 0.259 | 1.53 | - | 641 | 553 | -82 | -46 | 36 | - | - | Failure |
| 23 | 0.253 | 0.72 | - | 681 | 596 | -51 | -46 | 5 | - | - | Failure |
| 24 | 0.259 | 0.73 | - | 656 | 553 | -48 | -32 | 16 | - | - | Failure |

| No. | EV value (% by mass) | [Mn]+[Ni] (% by mass) | Number of carbides (pieces/$\mu$m$^2$) | Tensile strength (Mpa) | | vTr (°C) | vTr (°C) | $\Delta$vTr (°C) | SR cracking resistance | Creep characteristics | Comprehensive evaluation |
|---|---|---|---|---|---|---|---|---|---|---|---|
| | | | | Room temperature | 454°C | | | | | | |
| 25 | -0.068 | 0.73 | 1.5 | 653 | 551 | -70 | -55 | 15 | Failure | - | Failure |
| 26 | -0.145 | 0.72 | 5.2 | 659 | 559 | -62 | -48 | 14 | Failure | - | Failure |
| 27 | 0.800 | 0.73 | 0.0 | 601 | 510 | -95 | -90 | 5 | Good | 200 | Failure |
| 28 | 0.259 | 0.72 | - | 669 | 579 | -65 | -55 | 10 | - | - | Failure |
| 29 | 0.269 | 0.32 | - | 584 | 476 | -75 | -58 | 17 | - | - | Failure |
| 30 | 0.259 | 1.16 | - | 636 | 538 | -86 | -55 | 31 | - | - | Failure |

From the results described above, the following is taken into consideration. It is understood that Nos. 1 to 17, which met the requirements as stipulated by the present invention, are excellent in both SR cracking resistance and toughness. As opposed thereto, Nos. 18 to 30, which were devoid of any of the requirements as stipulated by the present invention, caused deterioration in at least one of SR cracking resistance and toughness.

Among them in No. 18, the content of C exceeded the upper limit as stipulated by the present invention, and the transition temperature vTr was higher than -80°C, in No. 19, the content of V in the weldmetal was lower than the lower limit as stipulated by the present invention, whereby the number of carbides was excessively large, the transition temperature vTr was higher than -80°C, and besides SR cracking resistance was worsened.

In Nos. 20, 21, &22, the sum total of the content of Mn [Mn] and the content of Ni [Ni] ([Mn] + [Ni]), the contents of Si and O, and the contents of Mn exceeded the upper limits as stipulated by the present invention, whereby the tempering brittleness characteristics of those were worsened.

In Nos. 23 &24, the contents of Ti and Al exceeded the upper limits as stipulated by the present invention, whereby the transition temperature vTr revealed markedly high values.

In Nos. 25 & 26, the EV values were outside the proper range as stipulated by the formula (1), whereby the number of carbides was excessively large, the transition temperature vTr was higher than -80°C, and besides SR cracking resistance was worsened.

In No. 27, the content of V in the weld metal exceeded the upper limit as stipulated by the present invention, whereby the number of carbides exceeded the upper limit as stipulated by the present invention, the number of carbides was excessively large, and creep characteristics were worsened. In No. 28, the content of Nb to be incorporated was excessively high, and the transition temperature vTr was higher than -80°C.

In No.29, the content of Mn in the weld metal was lower than the lower limit as stipulated by the present invention, whereby the strength was lowered, and the transition temperature vTr was higher than -80°C. In No.30, the content of Ni in the weld metal exceeded the upper limit as stipulated by the present invention, whereby the tempering brittleness characteristics were worsened.

Example 2

Shield arc welding rods (W 30 to W36) having the chemical components and shield rate as given in the following Table 10 were prepared by coating outer periphery of core wires having the chemical components compositions as given in the following Table 8 (each measuring 4.0 mm of diameter and 400 mm of length) with a flux (lagging material: F 2 to 8) having the chemical components compositions as given in the following Table 9.

Table 8

| Chemical compositions of sample core wire (% by mass) | | | | | | | | | | | | | | | | |
|---|---|---|---|---|---|---|---|---|---|---|---|---|---|---|---|---|
| C | Si | Mn | P | S | Cr | Mo | Ni | Al | Ti | V | Nb | Sn | Sb | As | N | O |
| 0.04 | 0.25 | 0.64 | 0.005 | 0.001 | 2.29 | 0.50 | 0 | 0.03 | 0 | 0 | 0 | 0.001 | 0.001 | 0.001 | 0.005 | 0.001 |

Table 9

| Symbol | Chemical compositions of fluxes (% by mass) | | | | | | | | | | | | | | | |
|---|---|---|---|---|---|---|---|---|---|---|---|---|---|---|---|---|
| | C | Si | Mn | P | S | Cr | Mo | Ni | Al | Ti | V | Nb | Sn | Sb | As | N |
| F2 | 0.19 | 2.15 | 1.55 | 0.002 | 0.004 | 2.9 | 1.09 | 0.45 | 0.06 | 0.03 | 3.06 | 0.00 | 0.001 | 0.001 | 0.001 | 0.011 |
| F3 | 0.15 | 2.03 | 1.61 | 0.002 | 0.004 | 2.9 | 1.13 | 0.37 | 0.06 | 0.03 | 3.17 | 0.22 | 0.001 | 0.001 | 0.001 | 0.016 |
| F4 | 0.21 | 2.28 | 1.83 | 0.002 | 0.004 | 3.0 | 1.29 | 0.47 | 0.07 | 0.03 | 2.29 | 0.00 | 0.001 | 0.001 | 0.001 | 0.017 |
| F5 | 0.24 | 2.03 | 1.32 | 0.002 | 0.004 | 3.1 | 1.13 | 0.75 | 0.03 | 0.01 | 3.22 | 0.00 | 0.001 | 0.001 | 0.001 | 0.014 |
| F6 | 0.10 | 2.15 | 1.61 | 0.002 | 0.004 | 2.8 | 1.18 | 0.45 | 0.06 | 0.03 | 2.80 | 0.00 | 0.001 | 0.001 | 0.001 | 0.016 |
| F7 | 0.05 | 2.28 | 1.73 | 0.002 | 0.004 | 2.9 | 1.13 | 0.48 | 0.06 | 0.03 | 1.37 | 0.00 | 0.001 | 0.001 | 0.001 | 0.018 |
| F8 | 0.29 | 2.56 | 1.92 | 0.002 | 0.005 | 3.4 | 1.34 | 0.53 | 0.08 | 0.03 | 2.01 | 0.00 | 0.001 | 0.001 | 0.001 | 0.027 |

Table 10

| Symbol | Chemical compositions of welding rods (% by mass) | | | | | | | | | | | | | | | | | Shield rate (%) |
|---|---|---|---|---|---|---|---|---|---|---|---|---|---|---|---|---|---|---|
| | C | Si | Mn | P | S | Cr | Mo | Ni | Al | Ti | V | Nb | Sn | Sb | As | N | O | |
| W30 | 0.08 | 0.71 | 0.86 | 0.004 | 0.002 | 2.4 | 1.02 | 0.11 | 0.04 | 0 | 0.73 | 0.00 | 0.02 | 0.002 | 0.001 | 0.007 | 0.001 | 24 |
| W31 | 0.07 | 0.68 | 0.87 | 0.004 | 0.002 | 2.5 | 1.03 | 0.09 | 0.04 | 0 | 0.76 | 0.05 | 0.02 | 0.002 | 0.001 | 0.008 | 1.001 | 24 |
| W32 | 0.08 | 0.72 | 0.91 | 0.004 | 0.002 | 2.5 | 1.07 | 0.11 | 0.04 | 0 | 0.53 | 0.00 | 0.02 | 0.002 | 0.001 | 0.008 | 2.001 | 23 |
| W33 | 0.09 | 0.68 | 0.80 | 0.004 | 0.002 | 2.5 | 1.03 | 0.18 | 0.03 | 0 | 0.77 | 0.00 | 0.02 | 0.002 | 0.001 | 0.007 | 3.001 | 24 |
| W34 | 0.05 | 0.71 | 0.87 | 0.004 | 0.002 | 2.4 | 1.04 | 0.11 | 0.04 | 0 | 0.67 | 0.00 | 0.02 | 0.002 | 0.001 | 0.008 | 4.001 | 24 |
| W35 | 0.04 | 0.74 | 0.90 | 0.004 | 0.002 | 2.4 | 1.03 | 0.12 | 0.04 | 0 | 0.33 | 0.00 | 0.02 | 0.002 | 0.001 | 0.008 | 5.001 | 24 |
| W36 | 0.09 | 0.73 | 0.91 | 0.004 | 0.002 | 2.5 | 1.07 | 0.11 | 0.04 | 0 | 0.42 | 0.00 | 0.02 | 0.002 | 0.001 | 0.010 | 6.001 | 21 |

Arc welding was carried out under the welding conditions shown in Table 11 by the use of the above - prepared welding rods, in which use was made of the base materials having the symbol P1 in the preceding Table, and the bevel geometry was same as in FIG. 1. Evaluations were made of the characteristics of the weld metals thus obtained. The chemical compositions are given in Table 12, and the results of characteristics tests in Table 13.

Table 11

| SAW welding conditions | | | | | |
|---|---|---|---|---|---|
| Polarity | Current (A) | Voltage (V) | Welding speed (cm/min) | Heat input (kJ/cm) | Preheat/Interpass temperature (°C) |
| AC | 170 | 24 | 10.5 | 23 | 220 - 225 |

Table 12

| No | Base material | Welding rod used | Flux | Chemical compositions of weld metals (% by mass) | | | | | | | | | | | | | | | | |
|----|------|-----|----|------|------|------|-------|-------|------|------|------|-------|-------|------|------|-------|-------|-------|-------|-------|
| | | | | C | Si | Mn | P | S | Cr | Mo | Ni | Al | Ti | V | Nb | Sn | Sb | As | N | O |
| 31 | P1 | W30 | F2 | 0.07 | 0.20 | 0.59 | 0.005 | 0.002 | 2.40 | 0.99 | 0.12 | 0.005 | 0.002 | 0.58 | - | 0.002 | 0.002 | 0.001 | 0.011 | 0.023 |
| 32 | P1 | W31 | F3 | 0.06 | 0.19 | 0.60 | 0.005 | 0.002 | 2.42 | 1.00 | 0.10 | 0.005 | 0.002 | 0.60 | 0.02 | 0.002 | 0.002 | 0.001 | 0.012 | 0.024 |
| 33 | P1 | W32 | F4 | 0.07 | 0.20 | 0.62 | 0.005 | 0.002 | 2.40 | 1.02 | 0.12 | 0.005 | 0.002 | 0.41 | - | 0.002 | 0.002 | 0.001 | 0.012 | 0.022 |
| 34 | P1 | W33 | F5 | 0.08 | 0.19 | 0.55 | 0.005 | 0.002 | 2.45 | 1.00 | 0.20 | 0.004 | 0.001 | 0.61 | - | 0.002 | 0.002 | 0.001 | 0.011 | 0.028 |
| 35 | P1 | W34 | F6 | 0.05 | 0.20 | 0.60 | 0.006 | 0.002 | 2.39 | 1.01 | 0.12 | 0.005 | 0.002 | 0.53 | - | 0.002 | 0.002 | 0.001 | 0.012 | 0.024 |
| 36 | P1 | W35 | F7 | 0.04 | 0.21 | 0.62 | 0.005 | 0.002 | 2.40 | 1.00 | 0.13 | 0.005 | 0.002 | 0.26 | - | 0.002 | 0.002 | 0.001 | 0.013 | 0.023 |
| 37 | P1 | W36 | F8 | 0.08 | 0.20 | 0.60 | 0.005 | 0.002 | 2.40 | 1.00 | 0.12 | 0.005 | 0.002 | 0.32 | - | 0.002 | 0.002 | 0.001 | 0.015 | 0.024 |

Table 13

| No. | EV value (% by mass) | [Mn]+[Ni] (% by mass) | Number of carbides (pieces/μm²) | Tensile strength (MPa) | | vTr (°C) | vTr' (°C) | ΔvTr (°C) | SR cracking resistance | Creep characteristics | Comprehensive evaluation |
|---|---|---|---|---|---|---|---|---|---|---|---|
| | | | | Room temperature | 454°C | | | | | | |
| 31 | 0.247 | 0.71 | 0.0 | 635 | 532 | -90 | -75 | 15 | Good | 221 | Good |
| 32 | 0.302 | 0.70 | 0.0 | 643 | 541 | -83 | -73 | 10 | Good | 225 | Good |
| 33 | 0.069 | 0.74 | 0.0 | 645 | 543 | -84 | -70 | 14 | Good | 236 | Good |
| 34 | 0.231 | 0.75 | 0.0 | 633 | 530 | -91 | -74 | 17 | Good | 228 | Good |
| 35 | 0.274 | 0.72 | 0.0 | 623 | 521 | -93 | -77 | 16 | Good | 216 | Good |
| 36 | 0.043 | 0.75 | 1.1 | 635 | 532 | -73 | -59 | 14 | Failure | - | Failure |
| 37 | -0.074 | 0.72 | 1.3 | 635 | 532 | -65 | -53 | 12 | Failure | - | Failure |

It is clearly understood from Table 13 that the items which satisfy all the requirements stipulated by the present invention (Nos. 31 to 35) are excellent in SR cracking resistance and toughness, whereas either item which is devoid of any of the requirements stipulated by the present invention (Nos. 36 & 37) are inferior in at least one characteristic of SR cracking resistance and toughness.

Specifically in No. 36, the content of V in the weld metal exceeds the upper limit stipulated by the present invention, whereby the transition temperature vTr was higher than -80°C, and SR cracking resistance was worsened. In No. 37, EV value is less than the lower limit stipulated by the formula (1), whereby the number of carbides was excessively large, the transition temperature vTr was higher than -80°C, and SR cracking resistance was worsened.

**Claims**

1. A weld metal excellent in low temperature toughness and SR cracking resistance which is used for high - strength Cr - Mo steel, which is formed by an arc welding method, and which comprises:

  0.02 to 0.10% of C (% by mass; the same holds also hereinafter),
  0.05 to 0.4% of Si,
  0.3 to 1.0% of Mn,
  0.8 to 3.25% of Cr,
  at most 2% (inclusive of 0%) of Mo,
  0.30 to 1.0% of V, and
  at most 0.03% of N,

  optionally, at least one species selected from the group consisting of at most 0.10% (exclusive of 0%) of Nb, at most 0.10% (exclusive of 0%) of Zr, at most 0.10% (exclusive of 0%) of Hf and at most 0.10% (exclusive of 0%) of Ta, and/or at least one species selected from the group consisting of at most 2.0% (exclusive of 0%) of W, and at most 2.0% (exclusive of 0%) of Co, and/or at most 0.015% (exclusive of 0%) of B, wherein the contents of Al, Ti and Ni are suppressed to at most 0.03%, at most 0.03% and at most 0.40%, respectively; sum total ([Mn] + [Ni]) of Mn content [Mn] and Ni content [Ni] is at most 1.2%; the balance is Fe and inevitable impurities; the contents of P, S, Sn, As and Sb among the inevitable impurities are suppressed each to at most 0.01%;
  the content of O is suppressed to at most 0.040%;
  EV value as defined by the following formula (1) satisfies EV ≥ 0.00; and
  the number of carbides which have an equivalent circle diameter of at least 0.2 $\mu$m and which are present in non heat affected zone of the weld metal after being subjected to stress relieving annealing at 625°C for 10 hours is at most 1.0 number/$\mu$m$^2$

$$EV = [V] - ([C] / 12 + [N] / 14) \times 50.9 \qquad (1)$$

wherein [V], [C] and [N] represent the contents (mass%) of V, C and N, respectively.

**Patentansprüche**

1. Schweißmetall mit hervorragender Niedrigtemperaturbeständigkeit und hervorragendem SR-Risswiderstand, welches für hochfesten Cr-Mo-Stahl verwendet wird, welcher durch ein Lichtbogenschweißverfahren gebildet wird, und welches umfasst:

  0,02 bis 0,10% C (Gewichtsprozent; dasselbe gilt auch nachfolgend),
  0,05 bis 0,4% Si,
  0,3 bis 1,0% Mn,
  0,8 bis 3,25% Cr,
  höchstens 2% (einschließlich 0%) Mo,
  0,30 bis 1,0% V, und
  höchstens 0,03% N,

  gegebenenfalls mindestens eine Spezies, ausgewählt aus der Gruppe, bestehend aus höchstens 0,10% (ausschließlich 0%) Nb, höchstens 0,10% (ausschließlich 0%) Zr, höchstens 0,10% (ausschließlich 0%) Hf und höchstens 0,10% (ausschließlich 0%) Ta, und/oder mindestens eine Spezies, ausgewählt aus der Gruppe, bestehend aus höchstens 2,0% (ausschließlich 0%) W, und höchstens 2,0% (ausschließlich 0%) Co, und/oder höchstens 0,015% (ausschließlich 0%) B, wobei die Anteile an Al, Ti und Ni auf höchstens 0,30%, höchstens 0,03%, beziehungsweise höchstens 0,40% reduziert sind; der Gesamtanteil ([Mn] + [Ni]) des Mn Anteils [Mn] und des Ni Anteils [Ni] höchstens 1,2% ist; die Differenz Fe und unvermeidbare Verunreinigungen sind; die Anteile an P, S, Sn, As und Sb unter den unvermeidbaren Verunreinigungen jeweils auf höchstens 0,01 % reduziert sind;
der Anteil an O auf höchstens 0,040% reduziert ist;
der EV Wert, wie von der folgenden Formel (1) definiert, EV $\geq$ 0,00 erfüllt; und die Anzahl an Carbiden, welche einen äquivalenten Kreisdurchmesser von mindestens 0,2 $\mu$m haben und welche in der Nichtwärmeeinflusszone des Schweißmetalls vorhanden sind, nachdem sie einem Spannungsarmglühen bei 625°C für 10 Stunden unterworfen worden sind, höchstens 1,0 Anzahl/$\mu$m$^2$ ist

$$EV = [V] - ([C] / 12 + [N] / 14) \times 50,9 \qquad (1)$$

wobei [V], [C] und [N] die Anteile (Gew.-%) an V, C, beziehungsweise N darstellen.

**Revendications**

1. Métal soudé excellent en ténacité à basse température et en résistance à la fissuration suite à libération de contrainte (SR) qui est utilisé pour de l'acier à haute résistance au Cr-Mo, qui est formé par un procédé de soudage à l'arc, et qui comprend :

   0,02 à 0,10 % de C (% en masse ; ceci étant aussi vrai pour la suite),
   0,05 à 0,4 % de Si,
   0,3 à 1,0% de Mn,
   0,8 à 3,25 % de Cr,
   au plus 2 % (comprenant 0 %) de Mo,
   0,30 à 1,0 % de V, et
   au plus 0,03 % de N,

   en variante, au moins une espèce sélectionnée à partir du groupe constitué par au plus 0,10 % (excluant 0 %) de Nb, au plus 0,10 % (excluant 0 %) de Zr, au plus 0,10 % (excluant 0 %) de Hf et au plus 0,10 % (excluant 0 %) de Ta, et/ou au moins une espèce sélectionnée à partir du groupe constitué par au plus 2,0 % (excluant 0 %) de W, et au plus 2,0 % (excluant 0 %) de Co, et/ou au plus 0,015% (excluant 0 %) de B, dans lequel les teneurs en Al, Ti et Ni sont supprimées jusqu'à respectivement un maximum de 0,03 %, un maximum de 0,03 % et un maximum de 0,40 % ; la somme totale de ([Mn] + [Ni]) de la teneur en Mn [Mn] et de la teneur en Ni [Ni] est au plus égale à 1,2 % ; le complément est du Fe et des impuretés inévitables ; les teneurs en P, S, Sn, As et Sb parmi les impuretés inévitables sont supprimées chacune jusqu'à un maximum de 0,01 % ; la teneur en O est supprimée jusqu'à un maximum de 0,040 % ;
   la valeur EV telle que définie par la formule (1) suivante satisfait l'inégalité EV $\geq$ 0,00 ; et
   le nombre de carbures qui présentent un diamètre circulaire équivalent d'au moins 0,2 $\mu$m et qui sont présents dans la zone non affectée par la chaleur du métal de soudage après avoir été soumis à un recuit de libération de contrainte à 625°C pendant 10 heures est inférieur ou égal à 1,0 unité/$\mu$m$^2$

$$EV = [V] - ([C] / 12 + [N] / 14) * 50,9 \qquad (1)$$

où [V], [C] et [N] représentent respectivement les teneurs (% en masse) en V, en C et en N.

# FIG.1

# FIG.2

FIG.3A

FIG.3B

FIG.3C

FIG.3D

FIG.3E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61071196 A
- JP 6328292 A
- JP 9192881 A
- FR 2740715 A1

### Non-patent literature cited in the description

- Research on stress relief annealing cracking. **KIUCHI et al.** bulletin of Institute for Welding. 1964, vol. 33, 718